# FASCICULE DE BREVET EUROPEEN

(11) **EP 1 409 426 B1**
(45) Date de publication et mention de la délivrance du brevet: **18.07.2007**
(21) Numéro de dépôt: 00958729.6
(22) Date de dépôt: 24.08.2000
(51) Int. Cl.: C03C 25/20

(54) **PROCEDE DE FABRICATION D'UN FIL ET PRODUITS COMPRENANT CE FIL**
HERSTELLUNGSVERFAHREN EINER FASER UND PRODUKTE DIE DIESE FASER ENTHALTEN
METHOD FOR MAKING YARN AND PRODUCTS COMPRISING SAME

(30) Priorité: 03.09.1999 FR 9911046
(43) Date de publication de la demande: 21.04.2004
(73) Titulaire: Saint-Gobain Vetrotex France S.A., 73000 Chambéry (FR)
(72) Inventeur: MOIREAU, Patrick, F-73190 Curienne (FR); GIBELLO, Bruno, F-73000 Chambéry (FR)
(74) Mandataire: Cardin, Elise
(86) Numéro de dépôt international: PCT/FR2000/002364
(87) Numéro de publication internationale: WO 2001/017923

(56) Documents cités:
- EP-A- 0 570 283
- FR-A- 1 161 659
- FR-A- 2 767 539
- GB-A- 668 319
- GB-A- 1 273 377

## Description

La présente invention est relative au domaine des fibres de renforcement et des composites et, en particulier, au dépôt de compositions d'ensimages sur des filaments (ou des fils) de verre.

La fabrication de fils de verre de renforcement se fait de façon connue à partir de filets de verre fondu s'écoutant des orifices de filières. Ces filets sont étirés sous forme de filaments continus, puis ces filaments sont rassemblés en fils de base, lesquels sont ensuite collectés.

Avant leur rassemblement sous forme de fils, les filaments sont revêtus d'un ensimage par passage sur un organe ensimeur. Ce dépôt est nécessaire à l'obtention des fils et permet leur association avec d'autres matières organiques et/ou inorganiques pour réaliser des composites.

L'ensimage sert en premier lieu de lubrifiant et protège les fils de l'abrasion résultant du frottement à grande vitesse des fils sur divers organes lors du procédé précédemment cité.

L'ensimage peut également assurer, notamment après polymérisation, l'intégrité des fils susmentionnés, c'est-à-dire la liaison des filaments entre eux au sein des fils. Cette intégrité est notamment recherchée dans les applications textiles où les fils sont soumis à de fortes contraintes mécaniques. En effet, si les filaments sont peu solidaires les uns des autres, ils se rompent plus facilement et viennent perturber le fonctionnement des machines textiles. Les fils non intègres sont, de plus, considérés comme difficiles à manipuler.

Cependant, l'ensimage est également employé dans des cas où cette intégrité n'est pas recherchée, comme pour les fibres de renforcement, lorsqu'une vitesse élevée d'imprégnation par la matière à renforcer est recherchée. Ainsi, dans la fabrication par exemple de tuyaux par des techniques d'imprégnation directe et d'enroulement filamentaire, on met en oeuvre des fils ouverts dans lesquels les filaments sont dissociés les uns des autres. Des quantités d'ensimage faibles, notamment inférieures à 0,5% en poids, sont alors utilisées.

L'ensimage facilite également le mouillage et/ou l'imprégnation des fils par les matières à renforcer et aide à la création de liaisons entre lesdits fils et lesdites matières. De la qualité de l'adhésion de la matière aux fils et de l'aptitude au mouillage et/ou à l'imprégnation des fils par la matière dépendent notamment les propriétés mécaniques des composites obtenus à partir de ladite matière et desdits fils.

La plupart des ensimages actuellement utilisés sont des ensimages aqueux simples à manipuler, mais devant être déposés en grandes quantités sur les filaments pour être efficaces. L'eau représente généralement plus de 90% en poids de ces ensimages (pour des raisons de viscosité notamment), ce qui oblige à sécher les fils avant leur utilisation, l'eau pouvant nuire à la bonne adhésion entre les fils et les matières à renforcer. Ces séchages sont longs et coûteux et leur efficacité n'est pas toujours optimale ; ils nécessitent la mise en oeuvre d'étuves de grande capacité. De plus, lorsqu'ils sont faits pendant l'opération de fibrage (c'est-à-dire avant collecte des fils obtenus par rassemblement des filaments), au niveau des filaments (WO 92/05122) ou au niveau des fils (US-A-3 853 605), ils nécessitent l'implantation de dispositifs de séchage sous chaque filière et lorsqu'ils sont faits sur des enroulements de fils, ils entraînent des risques de migration irrégulière et/ou sélective des composants de l'ensimage au sein des enroulements (les ensimages aqueux ayant déjà tendance à se répartir sur les fils de façon irrégulière du fait de leur nature), et éventuellement des phénomènes de coloration des fils ou de déformation des enroulements. D'autre part, la déformation des enroulements s'observe fréquemment, en l'absence de séchage, sur les enroulements à bords droits (stratifils) de fils fins (c'est-à-dire présentant un « titre » ou « masse linéique » de 300-600 tex (g/km) ou moins) revêtus d'ensimages aqueux.

C'est pour remédier à ces inconvénients qu'a été développé un nouveau type d'ensimages pratiquement dénués de solvants, dits anhydres. Les ensimages anhydres sont des solutions polymérisables et/ou réticulables qui contiennent éventuellement des solvants organiques et/ou de l'eau en faibles proportions, en général inférieures à 5% en poids. Ils se distinguent avantageusement des ensimages aqueux par leur aptitude à se répartir de manière homogène et uniforme à la surface des filaments, c'est-à-dire en formant des films d'épaisseurs constantes et en ce qu'ils rendent inutile tout traitement ultérieur de séchage ou d'élimination du solvant, car les faibles quantités de celui-ci s'évaporent lors du dépôt de l'ensimage sur les filaments et de la polymérisation de l'ensimage.

D'autre part, les quantités d'ensimage anhydre déposées sur les filaments sont bien moindres que celles d'ensimage aqueux ; ainsi, dans un dépôt au moyen d'un rouleau ensimeur, il se forme à la surface de celui-ci une pellicule d'épaisseur n'atteignant pas 15 µm dans le cas d'un ensimage anhydre, au lieu d'une pellicule de 90 µm d'épaisseur approximative pour un ensimage aqueux. Ces moindres quantités d'ensimage anhydre sont du reste déposées sur les filaments avec un rendement bien supérieur pouvant atteindre 100% pour un choix judicieux des conditions opératoires, tandis que ce rendement est généralement de l'ordre de 40 à 75% avec les ensimages aqueux.

Les ensimages anhydres se répartissent principalement en trois catégories.

La première regroupe les ensimages polymérisables au rayonnement actinique, tels que décrits dans le brevet EP 0 570 283 et comprenant par exemple :
◆ au moins un monomère et/ou oligomère mono- ou polyinsaturé du type polyester acrylate, époxy acrylate, composé siliconé, uréthane acrylate ;
◆ au moins un photoamorceur tel que la benzoine, l'acétophénone, la benzophénone, la sulfonylacétophénone et leurs dérivés, ainsi que les thioxanthones ;
◆ le cas échéant au moins un solvant organique ; et éventuellement :
◆ des additifs tels qu'au moins un agent mouillant, un promoteur d'adhésion, un agent anti-retrait, un agent de pontage consistant notamment en un silane ;

La deuxième famille d'ensimages anhydres est celle des ensimages polymérisables et/ou réticulables thermiquement, tels que décrits dans les demandes de brevets FR 2 713 625 et 2 743 361.

A titre d'exemple, le système de base de ces compositions comprend:
◆ un constituant acrylique et un peroxyde amorceur radicalaire thermique,
◆ ou un constituant époxy et un constituant anhydride qui polymérisent en réagissant l'un avec l'autre ;

La troisième catégorie d'ensimages anhydres fait partie de l'enseignement de la demande FR 2 763 328 : il s'agit des ensimages polymérisables à température ambiante, dont les systèmes de base peuvent contenir un ou plusieurs monomères homopolymérisables et/ou au moins deux monomères copolymérisables sans apport extérieur d'énergie. Dans l'hypothèse d'une copolymérisation de deux monomères ou mélanges de monomères, ceux-ci peuvent être déposés sur les filaments sous forme de leur mélange en solution, immédiatement après que ce mélange a été formé, ou sous forme d'une première solution stable contenant le premier monomère ou mélange de monomères et d'une seconde solution stable contenant le second monomère ou mélange de monomères. Dans cette dernière variante, la première solution est appliquée sur les filaments, la seconde l'est ultérieurement, au plus tard lors du rassemblement des filaments en fils. Quoi qu'il en soit, la copolymérisation démarre en général dès la mise en présence du premier et du second monomère l'un avec l'autre sur les filaments et, le cas échéant, du ou des catalyseurs requis.

Les traitements d'exposition au rayonnement ultraviolet et les traitements thermiques requis pour polymériser les ensimages des deux premiers types précédemment cités sont effectués en une ou en plusieurs fois, après le rassemblement des filaments en fils. On effectue ainsi quelquefois, selon l'utilisation envisagée et la nature des fils, un prétraitement d'irradiation ou de chauffage au moment de la collecte des fils sous diverses formes d'enroulements, de manière à prépolymériser l'ensimage, dont la polymérisation proprement dite est réalisée dans un traitement ultérieur d'irradiation ou de chauffage, lorsque le fil est déroulé en vue de la mise en oeuvre spécifique à laquelle il est destiné, textile ou de renforcement de matières organiques ou inorganiques. En effet, le fil revêtu de la composition non encore polymérisée ne présente pas une intégrité au sens ordinaire du terme, car les filaments gainés qui le constituent peuvent glisser les uns sur les autres. Ce fil est alors aisément manipulable et, lorsqu'il est bobiné sous forme d'enroulements, peut facilement être extrait des enroulements sans avoir subi au préalable de traitement de polymérisation de l'ensimage. Le fil revêtu de la composition d'ensimage non encore polymérisée a, par ailleurs, une très bonne aptitude au mouillage et à l'imprégnation par des matières à renforcer, l'imprégnation pouvant ainsi se faire plus rapidement (gain de productivité) et les composites obtenus présentant ainsi un aspect plus homogène et certaines propriétés mécaniques améliorées.

Cependant, comme décrit dans le brevet EP 0 570 283, la polymérisation de l'ensimage par irradiation aux ultraviolets d'un fil sous forme d'enroulement peut également comporter des avantages.

En ce qui concerne le dépôt d'ensimages anhydres sur les filaments de verre, plusieurs techniques sont connues. Ainsi, selon la demande FR 2 763 328 déjà mentionnée, ce dépôt est effectué " à l'aide d'un rouleau, d'un pulvérisateur, à l'aide d'un dispositif faisant également office d'organe de rassemblement, ou par l'intermédiaire d'autres fils ou filaments revêtus de la composition et mis au contact des filaments de verre ". Cette dernière technique fait référence au cas particulier de la réalisation de fils composites, constitués de filaments de verre et de filaments ou fils polymères thermoplastiques entremêlés.

Par définition, un dépôt par pulvérisation s'accompagne immanquablement de pertes plus ou moins importantes d'ensimage ; la récupération de cette proportion perdue, à supposer qu'elle soit possible, constitue un handicap.

Le mode de dépôt au moyen d'un rouleau ou d'un dispositif de rassemblement des filaments en fils consiste en un prélèvement d'ensimage à partir d'une pellicule liquide plus ou moins visqueuse et épaisse formée sur une surface lisse, présentant des gammes de propriétés physiques, notamment de dureté et de microporosité de surface, du type de celles des surfaces à base de graphite ou de diamant amorphe. Partant de la constatation que la nature chimique des ensimages anhydres en permet la mise en oeuvre en quantités toujours plus faibles, il existe à l'heure actuelle un besoin pour un procédé de formation, sur une surface macroscopiquement lisse de type graphite, d'une pellicule liquide toujours plus fine, d'épaisseur parfaitement régulière, contrôlable et reproductible. En effet, on peut attendre qu'un prélèvement d'ensimage sur les filaments à partir d'une telle pellicule aboutisse à l'enrobage des filaments par une quantité minimale d'ensimage, avec un rendement de dépôt accru, c'est-à-dire une diminution des pertes d'ensimage, et ce dans des conditions totalement maîtrisées. Finalement, on vise bien entendu l'obtention de filaments, de fils et de matières renforcées les contenant aux propriétés mécaniques suffisantes, ou au moins préservées, ou même nouvelles à certains égards.

Or, il n'existe pas à l'heure actuelle de procédé permettant de former par exemple à la surface d'un rouleau en graphite, une telle fine pellicule d'ensimage anhydre de manière réglable. En effet, l'immersion de la partie inférieure du rouleau dans la solution d'ensimage, conjuguée à la rotation du rouleau, ont pour résultat la formation à la surface du rouleau d'une couche dont les caractéristiques ne peuvent être réglées que dans une faible mesure en faisant varier la viscosité de la solution et la vitesse de rotation du rouleau. Cette couche est d'épaisseur trop importante, et l'on ne peut éviter des pertes d'ensimage au niveau de l'organe de rassemblement des filaments en fils, ou de la collecte des fils par projection sous l'effet de la force centrifuge inhérente aux vitesses d'enroulement élevées employées.

D'autre part, aucun système de dépôt direct sur un rouleau ensimeur à l'aide d'une pompe doseuse et d'une buse d'injection n'a encore permis la formation de la pellicule recherchée.

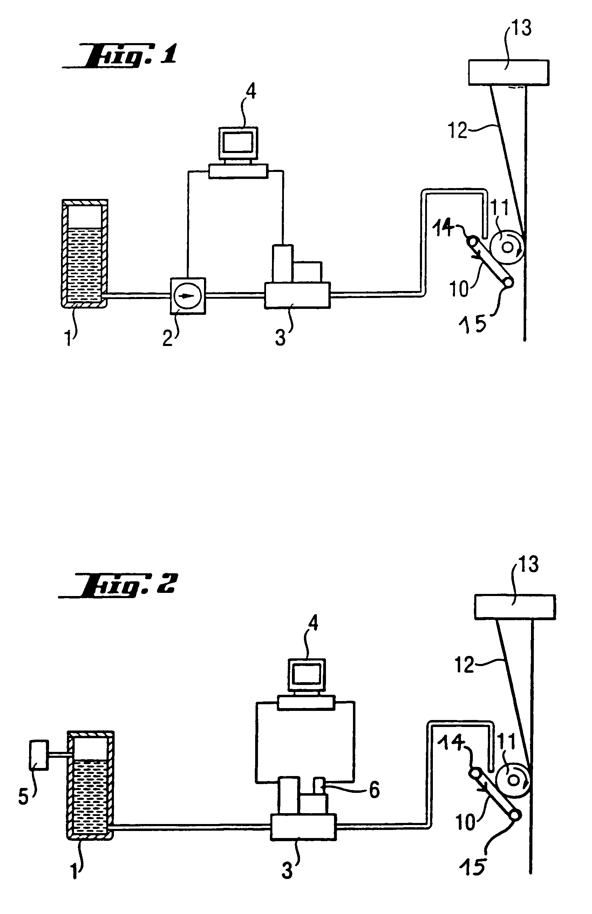

Par ailleurs le brevet EP 0 570 283 précédemment cité mentionne brièvement, dans sa partie descriptive de la figure 1, un dispositif d'enduction 13 constitué d'un applicateur garni d'un feutre humecté de mélange réactif à l'aide d'une pompe doseuse. La structure d'un feutre permet en effet de l'imbiber d'une solution de façon particulièrement homogène. Cependant, le prélèvement d'ensimage suggéré par le brevet européen, du feutre sur les filaments de verre, ne donne pas satisfaction dans le cadre du problème technique exposé ci-dessus, car le dépôt sur les filaments des faibles quantités d'ensimage requises ne pourrait être réalisé qu'au prix d'un assèchement relatif du feutre qui, étant donnée la structure irrégulière par nature du feutre, dont la surface présente des fibres de dimensions, de directions voire de textures variées, constituerait un risque d'accrochage des filaments de verre et donc de rupture desdits filaments. Seules des proportions relativement importantes d'ensimage sont ainsi susceptibles d'être déposées de la manière décrite dans le document.

Selon une approche intéressante, la demande FR 2 767 539 propose, dans un procédé de fabrication d'un fil continu dans lequel on forme une multiplicité de filaments continus par étirage mécanique d'une multiplicité de filets de matière(s) thermoplastique(s) (en particulier de verre) fondues, de déposer à la surface des filaments, avant de les rassembler en au moins un fil, un mélange à l'état liquide, en particulier un ensimage anhydre, selon la technique suivante. On imbibe en continu un matelas de fibres tenues mécaniquement du type feutre ou tissu par le mélange liquide, dont on prélève en continu au moins une partie au moyen d'un rouleau en rotation en contact avec le matelas ; c'est à partir de ce rouleau ensimeur que le mélange est déposé sur les filaments en cours d'étirage. Le matériau du rouleau ensimeur est bien entendu sélectionné de manière à résister à l'abrasion due au frottement des filaments. Cette technique permet de déposer à la surface des filaments des quantités d'ensimage aussi faibles que 0,5 à 1% en poids par rapport au poids des filaments, quantités suffisantes dans le cas notamment des ensimages anhydres performants connus à l'heure actuelle, avec un rendement de dépôt proche de ou égal à 100%. De manière parfaitement reproductible et réglable peut être formée à la surface du rouleau ensimeur une pellicule d'ensimage anhydre liquide d'épaisseur constante inférieure à 8 µm. La perte d'ensimage étant quasiment réduite à néant, un débit d'ensimage aussi faible que 160 à 350 g/h sera suffisant pour une filière produisant 800 kg/jour de filaments.

D'autre part, la demande de brevet français décrit un positionnement du matelas en plan incliné, et une alimentation de celui-ci en ensimage par goutte à goutte s'écoulant à la partie supérieure du matelas, de sorte que l'ensimage diffuse sur toute la surface du matelas à la fois par gravité et par capillarité. En outre, il doit être précisé que dans la mise en oeuvre industrielle de cette technique, les dimensions du rouleau ensimeur et du matelas sont nécessairement supérieures à celles de la surface de l'ensemble des filaments à ensimer, car ceux-ci sont fréquemment soumis à des déplacements latéraux et il convient évidemment de s'assurer que la totalité des filaments soit à chaque instant en contact avec le rouleau ensimeur, devant être lui-même muni d'une pellicule régulière d'ensimage sur toute la partie de sa surface en contact avec les filaments. Or l'on ne peut pas éviter que les zones d'extrémités latérales du rouleau ensimeur entrent peu ou même presque jamais en contact avec des filaments, car ces zones sont largement dimensionnées pour garantir que tous les filaments sont soumis au dépôt du mélange. L'une des conséquences en est la présence, dans ces zones d'extrémités latérales du rouleau ensimeur comme dans les zones correspondantes du matelas, de mélange plus ou moins stagnant. Il a de plus été constaté dans ces zones que le mélange liquide peut réagir selon le type d'ensimage sous l'action d'éléments extérieurs tels que l'eau, le gaz carbonique, une température élevée, en formant des condensats, gels, ce type de réactions chimiques ayant par ailleurs tendance à se propager vers le centre du matelas et du rouleau ensimeur, y compris dans les zones de celui-ci participant réellement au transfert du mélange sur les filaments. Ce phénomène provoque des zones d'assèchement à la surface du rouleau. Cette présence insuffisante d'ensimage entraîne un défaut de protection des filaments qui se traduit par la formation de bourre ou la rupture des filaments au niveau de la nappe.

En conséquence, l'invention a pour but de remédier à cet inconvénient.

A cet effet, l'objet principal de l'invention est un procédé de fabrication d'un fil continu dans lequel on forme une multiplicité de filaments continus par étirage mécanique d'une multiplicité de filets de matière(s) thermoplastique(s) fondue(s) s'écoulant des orifices d'au moins un dispositif de fibrage et qui consiste à déposer à la surface d'au moins une partie des filaments un mélange à l'état liquide, avant de les rassembler en au moins un fil, et dans lequel :
◆ on imbibe en continu un matelas absorbant par le mélange à l'état liquide ;
◆ on prélève en continu au moins une partie dudit mélange au moyen d'un rouleau en rotation en contact avec ledit matelas ;
◆ et l'on dépose sur les filaments en cours d'étirage ledit mélange à partir du rouleau ensimeur.

L'invention réside particulièrement dans le fait que le matelas est entraîné en rotation selon un axe parallèle à celui du rouleau ensimeur.

Il a en effet été constaté que cette disposition est de nature à provoquer une circulation du mélange liquide des zones d'extrémités latérales du matelas et du rouleau ensimeur vers leurs zones centrales, empêchant la stagnation du mélange et la formation de gel qui s'ensuit dans ces zones latérales. Ainsi est mis à disposition un moyen garantissant que les zones latérales du rouleau ensimeur et du matelas sont en permanence pourvues de mélange frais et liquide, de telle façon que le temps de séjour de l'ensimage dans le feutre avant renouvellement soit suffisamment court pour que les diverses réactions chimiques liées aux conditions extérieures engendrent une détérioration insignifiante de la qualité de transfert de l'ensimage sur le rouleau. Tout en résolvant le problème de la formation de gel, le procédé de l'invention conserve les qualités inhérentes au prélèvement du mélange par le rouleau du type par contact avec un matelas imbibé, ces qualités mentionnées précédemment étant : homogénéité, finesse et régularité d'épaisseur de la pellicule de mélange sur le rouleau, et finalement un rendement et une qualité de dépôt maximaux.

Le matelas absorbant est de préférence:
- soit un matelas de fibres tenues mécaniquement, tel qu'un feutre ou un tissu ;
- soit constitué d'un matériau spongieux élastomérique, compressible, notamment une mousse à base de polymère tel que polyuréthane, poly(tétrafluoroéthylène), polybutadiène... éventuellement renforcé, par exemple par une grille de fibres de verre.

Dans tous les cas, le matelas doit être inerte vis à vis des composants d'ensimage, tant sur le plan chimique (destruction des chaînes polymères...) que mécanique (gonflement, tenue à l'abrasion...).

Quand un matériau spongieux élastomérique est employé, il est de préférence de densité assez élevée avec des diamètres de porosité inférieurs à 200 micromètres et de distribution relativement homogène avec une compressibilité de 3 à 10 fois son volume. Il se présente notamment sous la forme de manchons ou de bandes renforcés généralement par une grille en fibres polymères ( polyamide, polypropylène, polyéthylène...), fibres de verre, fibres naturelles cellulosiques..., de façon à supprimer les capacités d'allongement sans altérer la compressibilité.

Selon le mode de réalisation le plus courant, tous les filaments constituant le fil sont en verre. L'invention n'exclut cependant pas la variante dans laquelle le fil est constitué de filaments de verre et de filaments organiques, seuls les filaments de verre étant munis d'un dépôt dudit mélange à l'état liquide ou, au contraire, les filaments organiques étant également munis de ce dépôt, ou d'un dépôt d'ensimage différent, les différentes compositions d'ensimages étant notamment susceptibles de réagir les unes avec les autres. Par filaments organiques, on entend des filaments polymères thermoplastiques, tels qu'en polypropylène, polyamide ou polyester. Ces filaments polymères peuvent être projetés entre les filaments de verre déjà ensimés, avant le rassemblement de tous ces filaments en fil, comme décrit dans le brevet EP 0 599 695.

Etant donné les qualités des ensimages anhydres citées précédemment, ainsi que leur excellente capacité de mouillage des filaments, il est compréhensible que le mélange liquide à déposer sur les filaments consiste de façon privilégiée en un tel ensimage anhydre, pour la définition duquel il est fait référence au contenu du brevet EP 0 570 283 et des demandes FR 2 713 625, 2 743 361 et 2 763 328 déjà citées.

Selon d'autres caractéristiques du procédé de l'invention, mentionnées par ordre de préférence croissant :
- les surfaces du matelas et du rouleau ensimeur sont animées à leur ligne de contact de mouvements de translation de mêmes directions,
- de même sens,
- et, dans ce dernier cas, la vitesse de translation de la surface du matelas est de 0,5 à 50% de celle de la translation de la surface du rouleau ensimeur. Cette disposition est avantageuse en particulier en cas de rupture d'un ou plusieurs filaments ; ceux-ci ont alors en effet tendance à adhérer au rouleau ensimeur mais sont repoussés au niveau de la ligne de contact de celui-ci avec le matelas du fait de la vitesse de translation de la surface du matelas, inférieure à celle du rouleau. Lorsque au contraire la vitesse de translation de la surface du matelas est supérieure à celle du rouleau, d'éventuels filaments cassés sont susceptibles d'être entraînés entre le matelas et le rouleau, compliquant considérablement les procédures de restauration des opérations de fabrication du fil continu.

Selon un autre mode de réalisation, les surfaces du matelas et du rouleau ensimeur sont animées à leur ligne de contact de mouvements de translation de même direction mais de sens opposés. La vitesse de translation de la surface du matelas est alors de préférence inférieure à 20 % de celle de la surface du rouleau ensimeur. En effet, le mélange à l'état liquide diffuse tout d'abord dans l'épaisseur du matelas, puis le prélèvement par le rouleau ensimeur se produit par capillarité. Il a été observé qu'à une vitesse trop élevée du matelas, ce processus ne peut pas se dérouler de manière suffisamment régulière car le temps séparant l'arrivée du mélange à l'état liquide en contact avec un point du matelas et l'entrée en contact de ce point avec le rouleau ensimeur devient trop court. Il en résulte une hétérogénéité du film liquide formé sur le rouleau ensimeur.

D'autre part, l'application double ou multiple du procédé de l'invention sur les filaments au cours d'étirage avant leur rassemblement en fil(s), dans le but d'y transférer des compositions liquides susceptibles de réagir les unes avec les autres, notamment à température ambiante par copolymérisation de constituants appartenant à de telles compositions distinctes, fait également partie de l'invention. En d'autres termes, l'encombrement du dispositif nécessaire à la mise en oeuvre du procédé de l'invention n'empêche nullement d'en associer deux ou plusieurs pour effectuer une double dépose ou une dépose multiple sur un unique ensemble de filaments, comme décrit dans la demande FR 2 763 328.

Dans le cas d'une telle double dépose ou dépose multiple, il est d'autre part possible, sans sortir du cadre de l'invention, d'effectuer un ou plusieurs des dépôts de mélange au moyen de dispositifs différents de celui décrit ci-dessus, pourvu que le premier des dépôts soit effectué au moyen du matelas et du rouleau ensimeur de l'invention : en effet pour obtenir un dépôt d'ensimage de bonne qualité sur les filaments, c'est à dire homogène, d'épaisseur réglable et régulière, c'est la qualité de dépôt du premier composant d 'ensimage qui est la plus déterminante, ce qui est bien connu dans le domaine considéré. L'excellence du mode de dépôt selon l'invention est telle qu'elle autorise l'utilisation, pour effectuer le second dépôt de mélange et/ou un dépôt ultérieur, de dispositifs relativement peu élaborés mais néanmoins susceptibles de produire une très bonne qualité finale de dépôt d'ensimage. Ce dispositif peut consister par exemple en la roulette de rassemblement et renvoi fixe équipée, au fond de sa rainure, d'une canalisation d'arrivée de mélange destiné au second dépôt ou à un dépôt ultérieur ; il assure l'entrée en contact des filaments revêtus préalablement d'au moins un premier mélange, avec le mélange ultérieur, simultanément au rassemblement des filaments en un fil et, éventuellement le renvoi c'est à dire le changement de direction de celui-ci.

Les fils obtenus par le procédé de l'invention sont généralement collectés sous forme d'enroulements sur des supports en rotation. Les fils obtenus selon l'invention sont aisément extractibles d'enroulements et aisément manipulables.

Les fils peuvent également être collectés sur des supports récepteurs en translation. Ils peuvent en effet être projetés par un organe servant également à les étirer, vers la surface de collecte se déplaçant transversalement à la direction des fils projetés en vue d'obtenir une nappe de fils continus entremêlés appelée "mat". Ils peuvent également être coupés avant collecte par un organe servant également à les étirer.

Les fils obtenus selon l'invention peuvent ainsi se trouver sous différentes formes après collecte, notamment sous forme de bobines de fils continus (stratifils, gâteaux, cops...), sous forme de fils coupés, peuvent être assemblés sous forme de tresses, de rubans, de mats ou de réseaux, tissés ou non, etc. Les filaments de verre formant ces fils peuvent présenter un diamètre compris entre 5 et 30 microns et le verre utilisé pour réaliser ces filaments peut être notamment du verre E, verre AR (alcali-résistant), verre C, verre R, verre Z, verre S, verre D, etc.

Les fils obtenus par un procédé conforme à l'invention peuvent être associés avantageusement à différentes matières à renforcer en vue de la réalisation de pièces composites présentant de bonnes propriétés mécaniques. Les composites sont avantageusement obtenus par association d'au moins des fils de verre selon l'invention et d'au moins une matière organique et/ou inorganique, le taux de verre au sein de ces composites étant généralement compris entre 20 et 80% en poids.

En conséquence, l'invention a également pour objet un produit constitué, au moins en partie, d'un fil obtenu par un procédé tel que décrit ci-dessus. Ce fil peut ou non avoir été soumis à un traitement ultérieur de coupe, tissage, à une projection mécanique ou à tout autre procédé de mise en forme ; il est éventuellement mélangé à une matière organique ou minérale pour en assurer le renforcement.

Ce fil présente une perte au feu faible au plus égale à 3% en poids et même, dans de nombreux modes de réalisation, au plus égale à 1 % en poids.

D'autres caractéristiques et avantages de l'invention apparaîtront à la lumière de la description qui suit, des dessins en annexe dans lesquels :
◆ les figures 1 à 3 sont des représentations schématiques de trois dispositifs de mise en oeuvre du procédé de l'invention.

Ces dispositifs comportent une réserve 1 d'ensimage maintenu éventuellement à une température constante assurant une bonne conservation du produit, afin de garantir la stabilité des conditions de dosage.

Selon la figure 1, l'ensimage est aspiré par une pompe 2 de type à membrane ou péristaltique, soumettant les fluides à des cisaillements particulièrement faibles.

La quantité aspirée est transférée sur le feutre de répartition 10 après avoir traversé un débitmètre 3.

D'autre part, un micro-ordinateur 4 est relié à la fois au débitmètre 3 et à la pompe 2, de manière à adapter en permanence le volume ou la masse d'ensimage délivrés par la pompe 2 en fonction de l'information fournie par le débitmètre.

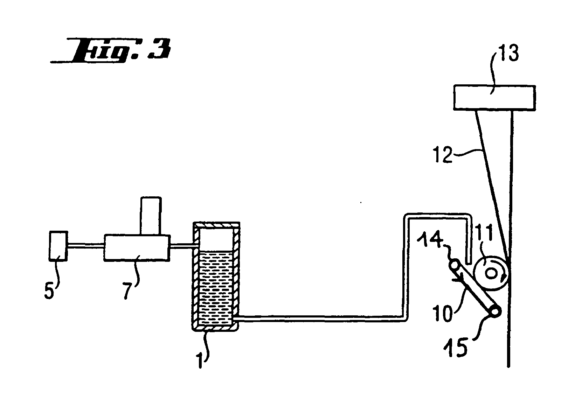

Les dispositifs des figures 2 et 3 emploient, pour l'alimentation du feutre 10, une source d'air comprimé 5 en tête du circuit de fluide en amont de la réserve 1.

Conformément à la figure 2, l'ensimage provenant de la réserve 1 traverse un débitmètre 3 et une vanne régulatrice 6, reliés tous deux à un micro-ordinateur 4. Cette fois, le micro-ordinateur 4 utilise l'information délivrée par le débitmètre 3 pour commander, en temps réel, une éventuelle correction du débit au moyen de la vanne régulatrice 6.

Cette fonction régulatrice est assurée, dans le dispositif simplifié représenté en figure 3, par une vanne régulatrice volumétrique à compensation de température 7, intercalée dans le circuit de fluide entre la source d'air sous pression 5 et la réserve 1. La vanne 7, à fonction régulatrice intégrée et autonome, rend superflu l'emploi d'un organe auxiliaire de gestion et commande du type ordinateur.

Le feutre 10 est une bande continue entraînée en rotation autour de deux rouleaux 14 et 15 d'axes parallèles. Une autre variante recommandée consiste à remplacer, pour l'entraînement de la bande continue, les deux rouleaux 14 et 15 de la figure par un rouleau unique parallèle à ceux-ci et positionné de manière à assurer le contact du feutre 10 avec le rouleau ensimeur 11.

Le feutre 10, alimenté régulièrement en ensimage, a pour fonction de répartir celui-ci sur une portion de la surface du rouleau ensimeur 11 légèrement plus grande que celle qui est en contact avec la nappe de filaments 12 en cours d'étirage et délivrés par la filière 13. Le rouleau ensimeur 11 a un axe parallèle à ceux des rouleaux 14 et 15 entraînant le feutre 10.

Le rouleau ensimeur 11 est entraîné en rotation dans le sens correspondant au sens d'étirage des filaments, et à une vitesse linéaire périphérique de 50 à 150 m/min (à comparer à la vitesse de défilement des filaments : 600 à 4000 m/min).

Le positionnement des rouleaux 14 et 15 est réglable, ce qui permet de faire varier l'inclinaison de l'ensemble qu'ils forment avec le feutre 10, ainsi que la pression exercée par cet ensemble sur le rouleau ensimeur 11.

Le feutre 10 est entraîné dans le sens correspondant à celui de la rotation du rouleau ensimeur 11, et à une vitesse linéaire de 0,10 à 75 m/min.

L'écoulement de l'ensimage et sa répartition dans le feutre 10 dépendent de la viscosité de l'ensimage, des caractéristiques du feutre (nature des constituants, densité, texture, dimensions), de la pression qu'il exerce sur le rouleau ensimeur ainsi que des caractéristiques des mouvements du feutre et du rouleau ensimeur.

La texture du feutre et la viscosité de l'ensimage sont étroitement liées. Par exemple, un feutre dense sera mouillé superficiellement par un ensimage visqueux, à l'opposé, un ensimage liquide pénétrera facilement dans un feutre peu dense et s'écoulera sans se répartir sur toute la largeur.

L'inclinaison du feutre a également une certaine influence sur la répartition de l'ensimage en donnant plus ou moins d'effet aux forces de gravité. Cette possibilité permet d'ajuster le fonctionnement ou de compenser d'éventuels défauts de répartition dus à un feutre pas tout à fait bien adapté.

Les correspondances optimales entre la viscosité de l'ensimage et la densité du feutre sont consignées à titre indicatif dans le tableau ci-dessous, pour les valeurs de vitesses indiquées précédemment, pour une inclinaison du feutre de 30° par rapport à l'horizontale, une longueur d'écoulement de 6 cm, une largeur de répartition de 6 cm et une pression du vérin sur le dispositif d'enduction de 1 bar :

| Viscosité de l'ensimage à 20°C (cP) | Densité du feutre (g/dm³) |
|---|---|
| < 20 | 200 - 400 |
| 20 - 50 | 150 - 250 |
| 50 - 100 | 125 - 175 |
| 100 - 250 | 100 - 150 |
| 250-400 | < 100 |

La nature du feutre intervient dans la qualité de répartition de l'ensimage par deux critères liés au type de fibre employé : la nature chimique des fibres, leur diamètre et leur homogénéité.

La grande majorité des fibres constituant les feutres est composée de fibres de cellulose ou de laine. Des matériaux synthétiques commencent aussi à être utilisés tels que les fibres de polypropylène ou de polyester.

Pour des compositions d'ensimage dont les constituants sont peu polaires, les feutres synthétiques de type polypropylène sont bien adaptés et la compatibilité chimique est satisfaisante. Pour des compositions à caractère polaire marqué (ce qui est le cas de beaucoup de composants constitutifs des ensimages), les feutres naturels de type laine (plus hydrophile) sont préférés.

La compatibilité chimique des différents matériaux des feutres peut être modifiée dans un sens ou l'autre par un traitement chimique approprié des fibres. Cependant, les interactions avec les composants de l'ensimage (qui sont, par leur faible poids moléculaire, de très bons solvants) deviennent difficiles à contrôler. Les fibres sans traitement sont préférées dans la plupart des cas.

D'une manière générale, le diamètre des fibres doit être le plus homogène possible pour faciliter le transfert de l'ensimage sur le rouleau. L'hétérogénéité des fibres, en particulier la présence de grosses fibres, provoque des différences d'épaisseur localisées du film d'ensimage à la surface du rouleau ensimeur mais néanmoins susceptibles d'entraîner des casses au rouleau par ressuyage. Les fibres de diamètre faible (généralement moins de 20 microns) sont préférées. De plus, la longueur des fibres, leur souplesse et leur enchevêtrement doivent être suffisamment importants pour éviter tout entraînement de fibres entières ou de brisures à la surface du rouleau. La présence d'éléments étrangers à la surface du rouleau occasionne généralement des casses dont l'origine est ultérieurement difficile à déterminer.

Le transfert de l'ensimage sur le rouleau ensimeur est supérieur à 95 % en fonctionnement normal. Pour obtenir une telle performance, il est possible d'agir sur différents paramètres.

En premier lieu, la pression exercée par le feutre sur le rouleau entraîne la formation d'une zone comprimée à l'intérieur du feutre où l'écoulement est très fortement réduit. Elle ne doit pas cependant être trop élevée pour ne pas entraîner de dégradation du feutre, du rouleau ou des mécanismes de motorisation.

Le rouleau en rotation entraîne l'ensimage disponible, celui-ci étant suffisamment compatible avec le matériau du rouleau pour ne pas provoquer de phénomène de démoulage. De plus, l'ensimage est toujours en quantité très inférieure à ce que le rouleau peut prélever.

A titre d'exemple, pour un rouleau graphite de 40 mm de diamètre et une longueur de contact feutre/rouleau de 80 mm, la pression qu'il faut exercer est, dans la majorité des cas, comprise entre 0,2 et 2 bars.

En second lieu, la vitesse relative du rouleau par rapport au feutre exerce une certaine influence sur le transfert feutre/routeau. Ainsi, lorsque l'ensimage présente une viscosité faible et un mouillage très efficace sur la surface du rouleau (en général pour les ensimages peu polaires) et/ou que le produit final nécessite une perte au feu élevée, c'est-à-dire une quantité d'ensimage importante, il est utile d'augmenter la vitesse relative susmentionnée pour augmenter la surface de prélèvement à mouiller et accroître finalement la quantité d'ensimage entraînée. Lorsqu'un rouleau de 40 mm de diamètre en graphite est utilisé, une variation de la rotation du rouleau entre 50 et 150 t/min donnera satisfaction dans la plupart des cas.

Le troisième et dernier paramètre à prendre en considération pour la qualité du transfert feutre/rouleau est celui de la nature chimique et de l'état de surface du rouleau. Ce paramètre est d'ailleurs encore nettement plus significatif pour la qualité du transfert rouleau/fibre.

Etant donné que les aspects de transfert feutre/rouleau et rouleau/fibre de verre sont étroitement liés, le meilleur matériau est actuellement le graphite ou ses dérivés.

En ce qui concerne les zones d'extrémités latérales du rouleau ensimeur 11, entrant rarement, voire jamais en contact avec les filaments 12, ainsi que les zones correspondantes du feutre 10, on constate, malgré l'absence de prélèvement d'ensimage par les filaments dans ces zones, que l'ensimage y est maintenu à l'état liquide, ne subissant aucune réaction de condensation ni aucune transformation en un état plus ou moins solide. L'observation permet d'attribuer ce phénomène à la présence, au sein du feutre 10, d'une circulation d'ensimage de ses zones latérales vers son centre, c'est à dire vers une zone de contact avec les filaments, donc de prélèvement d'ensimage par ceux-ci. Cette circulation est due à la mise en mouvement du feutre 10 selon l'invention.

Celle-ci fournit donc une solution complète au problème de la gélification décrit précédemment.

En fonctionnement normal, la technique de dépose des ensimages anhydres telle que décrite ci-dessus permet un rendement de dépose très proche ou égal à 100%. Avec les ensimages aqueux, ce rendement est généralement de l'ordre de 40 à 75%. Etant donné que les coûts des matières premières (ramenées à la matière sèche) sont sensiblement équivalents, l'intérêt économique des ensimages anhydres déposés selon cette méthode est évident.

De plus, sur le plan de l'environnement, il est intéressant de supprimer une source de déchets potentiellement polluante et à l'origine de facteurs de coût annexes pour la destruction des effluents générés.

En cas de production d'effluents (généralement en très faible quantité) lors des phases de nettoyage, d'essais ou de fonctionnement dans des conditions particulières et étant donné que l'ensemble des déchets est de nature organique, ceux-ci peuvent être facilement détruits par incinération dans des installations adaptées.

## Revendications

1. Procédé de fabrication d'un fil continu dans lequel on forme une multiplicité de filaments continus (12) par étirage mécanique d'une multiplicité de filets de matière(s) thermoplastique(s) fondue(s) s'écoulant des orifices d'au moins un dispositif de fibrage(13) qui consiste à déposer à la surface d'au moins une partie des filaments (12) un mélange à l'état liquide, avant de les rassembler en au moins un fil, et dans lequel :
◆ on imbibe par un débit contrôlé et en continu un matelas absorbant (10), par le mélange à l'état liquide ;
◆ on prélève en continu au moins une partie dudit mélange au moyen d'un rouleau (11) en rotation en contact avec ledit matelas (10), l'épaisseur de la pellicule dudit mélange à l'état liquide formée à la surface du rouleau (11) étant inférieure à 8 µm ;
◆ et l'on dépose sur les filaments (12) en cours d'étirage ledit mélange à partir du rouleau ensimeur (11),
**caractérisé en ce que** le matelas (10) est entraîné en rotation selon un axe parallèle à celui du rouleau ensimeur (11).

2. Procédé selon la revendication 1, **caractérisé en ce que** le matelas absorbant (10) est un matelas de fibres tenues mécaniquement, tel qu'un feutre ou un tissu.

3. Procédé selon la revendication 1, **caractérisé en ce que** le matelas absorbant (10) est en un matériau spongieux élastomérique, notamment une mousse à base de polymère tel que polyuréthane, poly(tétrafluoroéthylène), éventuellement renforcé.

4. Procédé selon l'une des revendications 1 à 3, **caractérisé en ce que** les filaments (12) comprennent des filaments polymères et des filaments de verre.

5. Procédé selon l'une des revendications 1 à 4, **caractérisé en ce que** le mélange à l'état liquide est un ensimage anhydre ou un composant d'ensimage anhydre.

6. Procédé selon l'une des revendications 1 à 5, **caractérisé en ce que** les surfaces du matelas (10) et du rouleau ensimeur (11) sont animées à leur ligne de contact de mouvements de translation de même direction.

7. Procédé selon la revendication 6, **caractérisé en ce que** les surfaces du matelas (10) et du rouleau ensimeur (11) sont animées à leur ligne de contact de mouvements de translation de même sens.

8. Procédé selon la revendication 7, **caractérisé en ce que** la vitesse de ladite translation de la surface du matelas (10) est de 0,5 à 50% de celle de ladite translation de la surface du rouleau ensimeur (11).

9. Procédé selon la revendication 6, **caractérisé en ce que** les surfaces du matelas (10) et du rouleau ensimeur (11) sont animées à leur ligne de contact de mouvements de translation de sens opposés.

10. Procédé selon l'une des revendications 1 à 9, **caractérisé en ce que** plusieurs mélanges sont déposés consécutivement à la surface des filaments (12), et **en ce que** le premier de ces dépôts est effectué au moyen du matelas (10) et du rouleau ensimeur (11), les dépôts suivants étant effectués au moyen de dispositifs identiques ou différents.

11. Procédé selon l'une des revendications 1 à 10, **caractérisé en ce que** l'alimentation du matelas (10) est effectuée par distribution au moyen d'une pompe doseuse (2), notamment de type à membrane ou péristaltique.

12. Procédé selon la revendication 11, **caractérisé en ce que** les moyens pour l'alimentation du matelas (10) comprennent un dispositif de contrôle permanent consistant en un débitmètre (3) intercalé dans le circuit du fluide entre la pompe (2) et le matelas (10) et en un organe de gestion et de commande (4) tel qu'un ordinateur relié à la fois au débitmètre (3) et à la pompe (2).

13. Procédé selon l'une des revendications 1 à 10, **caractérisé en ce que** l'alimentation du matelas (10) est effectuée par apport d'un gaz sous pression (5) en amont d'une réserve (1) dudit mélange à l'état liquide.

14. Procédé selon la revendication 13, **caractérisé en ce que** les moyens pour l'alimentation du matelas (10) comprennent un dispositif de régulation consistant en un débitmètre (3) et une vanne régulatrice (6) intercalés dans le circuit de fluide, entre ladite réserve (1) et le matelas (10) et en un organe de gestion et de commande (4) tel qu'un ordinateur relié à la fois au débitmètre (3) et à la vanne régulatrice (6).

15. Procédé selon la revendication 13, **caractérisé en ce que** les moyens pour l'alimentation du matelas (10) comprennent un dispositif de régulation consistant en une vanne régulatrice volumétrique à compensation de température (7) intercalée dans le circuit de fluide entre l'arrivée d'air sous pression (5) et ladite réserve (1).

16. Procédé selon la revendication 2, **caractérisé en ce que** le matelas (10) est choisi parmi les feutres ou tissus synthétiques, notamment en polypropylène ou en polyester et parmi les feutres ou tissus naturels, notamment en laine ou en cellulose.

17. Procédé selon la revendication 16, **caractérisé en ce que** le matelas (10) est essentiellement constitué de fibres de diamètres inférieurs à 20 µm.

18. Procédé selon l'une des revendications 1 à 17, **caractérisé en ce que** le rouleau ensimeur (11) présente des microporosités de surface de dimensions inférieures à 10 µm.

19. Procédé selon la revendication 18, **caractérisé en ce que** la surface du rouleau ensimeur (11) est constituée de graphite ou de dérivés de celui-ci.

20. Procédé selon l'une des revendications 1 à 19, **caractérisé en ce que** l'épaisseur de la pellicule dudit mélange à l'état liquide formée à la surface du rouleau ensimeur (11) est comprise entre 3 et 5 µm.

21. Procédé selon l'une des revendications 1 à 20, **caractérisé en ce que** ledit mélange à l'état liquide est déposé sur les filaments (12) à raison d'au plus 3% en poids, de préférence au plus 1% en poids par rapport au poids des filaments (12).

22. Procédé selon l'une des revendications 1 à 21, **caractérisé en ce qu'**il est mis en oeuvre plusieurs fois successivement pour transférer séparément sur les filaments (12) des mélanges à l'état liquide susceptibles de réagir les uns avec les autres.

## Claims

1. Process for manufacturing a continuous yarn, which consists in forming a multiplicity of continuous filaments (12) by the mechanical drawing of a multiplicity of streams of molten thermoplastic(s) flowing out of the orifices of at least one fiberizing device (13) and which consists in depositing a mixture, in the liquid state, on the surface of at least some of the filaments (12) before they are brought together into at least one yarn, and in which process:
• an absorbent mat (10) is continuously impregnated at a controlled rate with the mixture in the liquid state;
• at least some of said mixture is continuously taken up by means of a rotating roller (11) in contact with said mat (10), the thickness of the film of said mixture in the liquid state formed on the surface of the roller (11) being less than 8µm; and
• using the sizing roller (11), said mixture is deposited on the filaments (12) while they are being drawn,
**characterized in that** the mat (10) is driven in rotation about an axis parallel to that of the sizing roller (11).

2. Process according to Claim 1, **characterized in that** the absorbent mat (10) is a mat of fibers mechanically held together, such as a felt or a woven.

3. Process according to Claim 1, **characterized in that** the absorbent mat (10) is made of an elastomeric spongy material, especially a foam based on a polymer such as polyurethane or poly(tetrafluroethylene), possibly reinforced.

4. Process according to one of Claims 1 to 3, **characterized in that** the filaments (12) comprise polymer filaments and glass filaments.

5. Process according to one of Claims 1 to 4, **characterized in that** the mixture in the liquid state is an anhydrous size or an anhydrous size component.

6. Process according to one of Claims 1 to 5, **characterized in that** the surface of the mat (10) and the surface of the sizing roller (11) are driven in translational movements in the same direction along their line of contact.

7. Process according to Claim 6, **characterized in that** the surface of the mat (10) and the surface of the sizing roller (11) are driven in translational movements in the same sense along their line of contact.

8. Process according to Claim 7, **characterized in that** the speed of said translation of the surface of the mat (10) is from 0.5 to 50% of that of said translation of the surface of the sizing roller (11).

9. Process according to Claim 6, **characterized in that** the surface of the mat (10) and the surface of the sizing roller (11) are made to undergo translational movements in opposite senses along their line of contact.

10. Process according to one of Claims 1 to 9, **characterized in that** several mixtures are deposited in succession on the surface of the filaments (12) and **in that** the first of these coatings is deposited by means of the mat (10) and the sizing roller (11), the following coatings being deposited by means of identical or different devices.

11. Process according to one of Claims 1 to 3, **characterized in that** the mat (10) is fed by dispensing by means of a metering pump (2), especially a pump of the diaphragm or peristaltic type.

12. Process according to Claim 11, **characterized in that** the means for feeding the mat (10) comprise a permanent control device consisting of a flow meter (3), inserted into the fluid circuit between the pump (2) and the mat (10), and of a management and control means (4) such as a computer connected both to the flow meter (3) and to the pump (2).

13. Process according to one of Claims 1 to 10, **characterized in that** the mat (10) is fed by delivering a pressurized gas (5) upstream of a tank (1) of said mixture in the liquid state.

14. Process according to Claim 13, **characterized in that** the means for feeding the mat (10) comprise a regulating device consisting of a flow meter (3) and a regulating valve (6), these being inserted into the fluid circuit between said tank (1) and the mat (10), and of a management and control means (4) such as a computer connected both to the flow meter (3) and to the regulating valve (6).

15. Process according to Claim 13, **characterized in that** the means for feeding the mat (10) comprise a regulating device consisting of a temperature-compensating volumetric regulating valve (7) inserted into the fluid circuit between the pressurized-air inlet (5) and said tank (1).

16. Process according to Claim 2, **characterized in that** the mat (10) is chosen from synthetic felts or woven fabrics, especially made of polypropylene or of polyester, and from natural felts or woven fabrics, especially made of wool or of cellulose.

17. Process according to Claim 16, **characterized in that** the mat (10) essentially consists of fibers having diameters of less than 20 µm.

18. Process according to one of Claims 1 to 17, **characterized in that** the sizing roller (11) has surface micropores whose dimensions are less than 10 µm.

19. Process according to Claim 18, **characterized in that** the surface of the sizing roller (11) is made of graphite or derivatives thereof.

20. Process according to one of Claims 1 to 19, **characterized in that** the thickness of the film of said mixture in the liquid state formed on the surface of the sizing roller (11) is between 3 and 5 µm.

21. Process according to one of Claims 1 to 20, **characterized in that** said mixture in the liquid state is deposited onto the filaments (12) in an amount of at most 3% by weight, preferably at most 1% by weight, with respect to the weight of the filaments (12).

22. Process according to one of Claims 1 to 21, **characterized in that** it is employed several times in succession in order to transfer, separately, onto the filaments (12), mixtures in the liquid state which are capable of reacting with one another.

## Patentansprüche

1. Verfahren zur Herstellung eines endlosen Fadens, in welchem eine Vielzahl endloser Filamente (12) durch mechanisches Ziehen einer Vielzahl von Strahlen aus (einem) geschmolzenen thermoplastischen Material(ien), die aus den Öffnungen mindestens einer Spinneinrichtung (13) fließen, gebildet wird, welches darin besteht, auf die Oberfläche wenigstens eines Teils der Filamente (12) ein flüssiges Gemisch aufzubringen, bevor sie zu mindestens einem Faden vereinigt werden, und in welchem:
- eine absorbierende Matte (10) mit dem flüssigen Gemisch mit einem kontrollierten Durchsatz kontinuierlich getränkt wird,
- wenigstens ein Teil des Gemischs mittels einer sich in Berührung mit der Matte (10) befindlichen, rotierenden Walze (11) kontinuierlich entnommen wird, wobei die Dicke des Films aus diesem flüssigen Gemisch, der sich auf der Oberfläche der Walze (11) gebildet hat, weniger als 8 µm beträgt, und
- dieses Gemisch von der Beschichtungswalze (11) auf die Filamente (12) während des Ziehvorgangs aufgebracht wird,
**dadurch gekennzeichnet, dass** die Matte (10) in einer Achse in Umdrehung versetzt wird, die parallel zu derjenigen der Beschichtungswalze (11) steht.

2. Verfahren nach Anspruch 1, **dadurch gekennzeichnet, dass** die absorbierende Matte (10) eine solche aus mechanisch festen Fasern wie ein Filz oder Gewebe ist.

3. Verfahren nach Anspruch 1, **dadurch gekennzeichnet, dass** die absorbierende Matte (10) aus einem elastomeren Schwammmaterial, insbesondere einem Schaumstoff auf der Basis eines Polymers wie eines gegebenenfalls verstärkten Polyurethans und Polytetrafluorethylens, besteht.

4. Verfahren nach einem der Ansprüche 1 bis 3, **dadurch gekennzeichnet, dass** die Filamente (12) Polymerfilamente und Glasfilamente umfassen.

5. Verfahren nach einem der Ansprüche 1 bis 4, **dadurch gekennzeichnet, dass** das Gemisch im flüssigen Zustand eine wasserfreie Schlichte oder eine wasserfreie Schlichtekomponente ist.

6. Verfahren nach einem der Ansprüche 1 bis 5, **dadurch gekennzeichnet, dass** die Oberflächen der Matte (10) und der Beschichtungswalze (11) in ihrer Berührungslinie mit Translationsbewegungen in derselben Richtung angetrieben werden.

7. Verfahren nach Anspruch 6, **dadurch gekennzeichnet, dass** die Oberflächen der Matte (10) und der Beschichtungswalze (11) in ihrer Berührungslinie mit Translationsbewegungen im selben Sinn angetrieben werden.

8. Verfahren nach Anspruch 7, **dadurch gekennzeichnet, dass** die Translationsgeschwindigkeit der Oberfläche der Matte (10) 0,5 bis 50 % derjenigen der Oberfläche der Beschichtungswalze (11) beträgt.

9. Verfahren nach Anspruch 6, **dadurch gekennzeichnet, dass** die Oberflächen der Matte (10) und der Beschichtungswalze (11) in ihrer Berührungslinie mit Translationsbewegungen im entgegengesetzten Sinn angetrieben werden.

10. Verfahren nach einem der Ansprüche 1 bis 9, **dadurch gekennzeichnet, dass** mehrere Gemische nacheinander auf die Oberfläche der Filamente (12) aufgebracht werden, **und dass** die erste dieser Beschichtungen mittels der Matte (10) und der Beschichtungswalze (11) durchgeführt wird und die folgenden Beschichtungen mittels gleicher oder anderer Vorrichtungen durchgeführt werden.

11. Verfahren nach einem der Ansprüche 1 bis 10, **dadurch gekennzeichnet, dass** die Versorgung der Matte (10) durch Zufuhr mittels einer Dosierpumpe (2), insbesondere einer Membran- oder Quetschschlauchpumpe, durchgeführt wird.

12. Verfahren nach Anspruch 11, **dadurch gekennzeichnet, dass** die Mittel zur Versorgung der Matte (10) eine Einrichtung zur permanenten Regelung umfassen, die aus einem Durchflussmesser (3), der in die Fluidleitung zwischen der Pumpe (2) und der Matte (10) eingebaut ist, und einem Steuer- und Regelorgan (4) wie einem Mikrocomputer, der gleichzeitig mit dem Durchflussmesser (3) und der Pumpe (2) verbunden ist, besteht.

13. Verfahren nach einem der Ansprüche 1 bis 10, **dadurch gekennzeichnet, dass** die Versorgung der Matte (10) durch Zufuhr eines Druckgases (5) vor einem Vorratsbehälter (1) für das flüssige Gemisch durchgeführt wird.

14. Verfahren nach Anspruch 13, **dadurch gekennzeichnet, dass** die Mittel zur Versorgung der Matte (10) eine Regeleinrichtung umfassen, die aus einem Durchflussmesser (3) und einem Regelventil (6), die in die Fluidleitung zwischen dem Vorratsbehälter (1) und der Matte (10) eingebaut sind, und einem Steuer- und Regelorgan (4) wie einem Mikrocomputer, der gleichzeitig mit dem Durchflussmesser (3) und dem Regelventil (6) verbunden ist, besteht.

15. Verfahren nach Anspruch 13, **dadurch gekennzeichnet, dass** die Mittel zur Versorgung der Matte (10) eine Regeleinrichtung umfassen, die aus einem Volumenregelventil (7) mit Temperaturausgleich, das in die Fluidleitung zwischen der Druckluftzuleitung (5) und dem Vorratsbehälter (1) eingebaut ist, besteht.

16. Verfahren nach Anspruch 2, **dadurch gekennzeichnet, dass** die Matte (10) aus synthetischen Filzen oder Geweben, insbesondere aus Polypropylen oder Polyester, und aus natürlichen Filzen oder Geweben, insbesondere aus Wolle oder Cellulose, ausgewählt ist.

17. Verfahren nach Anspruch 16, **dadurch gekennzeichnet, dass** die Matte (10) im Wesentlichen von Fasern mit einem Durchmesser von kleiner als 20 µm gebildet wird.

18. Verfahren nach einem der Ansprüche 1 bis 17, **dadurch gekennzeichnet, dass** die Beschichtungswalze (11) Oberflächenmikroporositäten mit Abmessungen von kleiner als 10 µm aufweist.

19. Verfahren nach Anspruch 18, **dadurch gekennzeichnet, dass** die Oberfläche der Beschichtungswalze (11) aus Graphit oder seinen Derivaten besteht.

20. Verfahren nach einem der Ansprüche 1 bis 19, **dadurch gekennzeichnet, dass** die Dicke des Films aus dem flüssigen Gemisch, der sich auf der Oberfläche der Beschichtungswalze (11) gebildet hat, 3 bis 5 µm beträgt.

21. Verfahren nach einem der Ansprüche 1 bis 20, **dadurch gekennzeichnet, dass** das Gemisch im flüssigen Zustand auf die Filamente (12) mit einem Anteil von höchstens 3 Gew.-% und vorzugsweise höchstens 1 Gew.-%, bezogen auf das Gewicht der Filamente (12), aufgebracht wird.

22. Verfahren nach einem der Ansprüche 1 bis 21, **dadurch gekennzeichnet, dass** es mehrere Male nacheinander durchgeführt wird, um auf die Filamente (12) flüssige Gemische, die miteinander reagieren können, separat aufzubringen.
